(19) Europäisches Patentamt
European Patent Office
Office européen des brevets

(11) EP 1 555 297 A1

# (12) EUROPEAN PATENT APPLICATION

(43) Date of publication:
**20.07.2005 Bulletin 2005/29**

(51) Int Cl.[7]: **C08L 71/02**, C08G 65/02, C08G 65/336

(21) Application number: **05250126.9**

(22) Date of filing: **12.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **13.01.2004 JP 2004005717**

(71) Applicant: **SHIN-ETSU CHEMICAL CO., LTD.**
**Chiyoda-ku, Tokyo (JP)**

(72) Inventors:
- **Yamaguchi, Hiromasa, c/o Silicone El. Mat. Res.Ctr Matsuida-machi Usui-gun, Gunma-ken (JP)**
- **Osawa, Yasuhisa, c/o Silicone El. Mat. Res.Ctr. Matsuida-machi Usui-gun, Gunma-ken (JP)**
- **Sato, Shinichi, c/o Silicone El. Mat. Res.Ctr. Matsuida-machi Usui-gun, Gunma-ken (JP)**

(74) Representative: **Stoner, Gerard Patrick et al**
**Mewburn Ellis LLP**
**York House**
**23 Kingsway**
**London WC2B 6HP (GB)**

## (54) Injection molding fluoropolyether rubber compositions

(57) Fluoropolyether rubber compositions comprising (A) a polyfluorodialkenyl compound terminated with alkenyl groups, (B) a perfluoropolyalkenyl compound or a polyalkenylsiloxane compound, (C) a fluorine-modified organosilicon compound having at least two SiH groups, (D) a platinum group compound, and (E) hydrophobic silica powder are suited for injection molding, typically by LIMS. Rubber parts resulting from curing have heat resistance, chemical resistance, solvent resistance, low-temperature properties, high hardness and high strength.



Printed by Jouve, 75001 PARIS (FR)

## Description

This invention relates to fluoropolyether rubber compositions which can be injection molded into cured products having improved heat resistance, chemical resistance, solvent resistance, and low-temperature properties as well as a high hardness and high strength.

BACKGROUND

Japanese Patent No. 2,990,646 (JP-A 8-199070) discloses a curable composition as a liquefiable rubber material having improved heat resistance, chemical resistance, solvent resistance, and low-temperature properties as well as low moisture permeability. This composition is difficult to produce rubber with good physical properties including high hardness and high strength.

One solution is to add a compound having a molecular weight of up to 2,500 and containing at least three alkenyl groups per molecule as disclosed in JP-A 2002-293919. Depending on a particular compound added, the composition has an extremely increased viscosity or a slow cure rate, making it difficult to form cured products by injection molding using a liquid injection molding system (LIMS).

In the recent manufacture of rubber parts, they are often manufactured by injection molding because potential automation allows for labor savings. It would be desirable to have a fluoropolyether rubber composition which can be injection molded into parts having improved heat resistance, chemical resistance, solvent resistance, and low-temperature properties as well as satisfactory rubber physical properties including a high hardness and high strength.

An object herein is to provide new and useful fluoropolyether rubber compositions which can be injection molded into parts having satisfactory rubber physical properties including a high hardness and high strength. Other aspects are methods of preparation and use of the compositions, and moulded articles comprising them in cured form.

The inventors have found that by compounding a polyfluorodialkenyl compound having alkenyl groups at both ends of a molecular chain, a polyalkenyl compound having the general formula (1) and/or (2), shown below, a fluorine-modified organosilicon compound haying at least two silicon atom-bonded hydrogen atoms per molecule, a hydrosilylating catalyst, and a hydrophobic silica powder having a BET specific surface area of at least 50 $m^2/g$ and a vinyl content of $1\times10^{-3}$ to $2\times10^{-2}$ mol/100 g and treated with an organosilicon compound, there are obtained fluoropolyether rubber compositions which can be injection molded into cured parts having improved heat resistance, chemical resistance, solvent resistance, and low-temperature properties as well as satisfactory rubber physical properties including a high hardness and high strength.

Accordingly, the invention provides a fluoropolyether rubber composition for injection molding, comprising as essential components,

(A) a polyfluorodialkenyl compound having alkenyl groups at both ends of a molecular chain,
(B) a perfluoropolyalkenyl compound having the general formula (1):

$$\left\{H_2C{=}CH{-}\left(CH_2\right)_b\right\}_a{-}Q{-}Rf{-}Q{-}\left\{\left(CH_2\right)_b{-}CH{=}CH_2\right\}_a \qquad (1)$$

wherein Rf is a divalent perfluoroalkylene group which may contain an ether bond in its molecular chain, Q is independently a tri- or tetra-valent organic group, a is independently 2 or 3, and b is independently 0 or 1, and/or a polyalkenylsiloxane compound having the general formula (2):

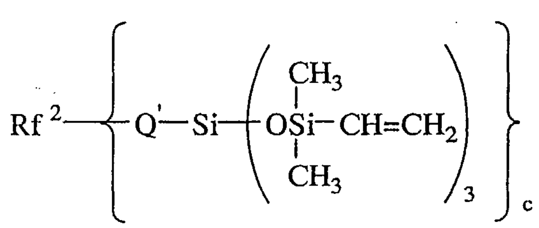

(2)

wherein $Rf^2$ is a monovalent perfluoroalkyl group or divalent perfluoroalkylene group, which may contain an ether bond in its molecular chain, Q' is a divalent organic group, and c is 1 or 2,

(C) a fluorine-modified organosilicon compound having at least two silicon atom-bonded hydrogen atoms per molecule,

(D) a platinum group compound, and

(E) a hydrophobic silica powder having a BET specific surface area of at least 50 $m^2/g$ and a vinyl content of $1\times10^{-3}$ to $2\times10^{-2}$ mole/100 g and surface treated with an organosilicon compound.

The fluoropolyether rubber composition of the invention has improved heat resistance, chemical resistance, solvent resistance, low-temperature properties and moldability by injection molding such as by LIMS, and can be molded into cured parts having satisfactory rubber physical properties including a high hardness and high strength.

FURTHER EXPLANATIONS: OPTIONS AND PREFERENCES

Component A: Polyfluorodialkenyl compound

Component (A) is a polyfluorodialkenyl compound having alkenyl groups at both ends of a molecular chain, and preferably represented by the general formula (3).

$$CH_2=CH-(X)_a-Rf^1-(X')_a-CH=CH_2 \qquad (3)$$

Herein X is a divalent group of the formula: $-CH_2-$, $-CH_2O-$, $-CH_2OCH_2-$ or $-Y-NR^1-CO-$ wherein Y is a divalent group of the formula: $-CH_2-$ or the following formula:

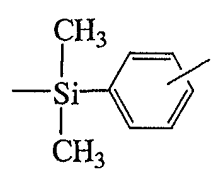

and $R^1$ is hydrogen or a substituted or unsubstituted monovalent hydrocarbon group. X' is a divalent group of the formula: $-CH_2-$, $-OCH_2-$, $-CH_2OCH_2-$ or $-CO-NR^1-Y'-$ wherein Y' is a divalent group of the formula: $-CH_2-$ or the following formula:

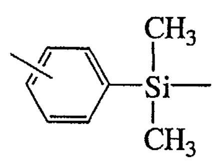

and $R^1$ is as defined above. The subscript "a" is each independently 0 or 1.

$R^1$ associated with X or X' stands for hydrogen atoms or substituted or unsubstituted monovalent hydrocarbon groups, preferably of 1 to 12 carbon atoms, more preferably of 1 to 10 carbon atoms, for example, alkyl groups such as methyl, ethyl, propyl, butyl, hexyl, cyclohexyl and octyl, aryl groups such as phenyl and tolyl, aralkyl groups such as benzyl and phenylethyl, and substituted forms of the foregoing groups in which some or all of the hydrogen atoms are replaced by halogen atoms such as fluorine.

$Rf^1$ is a divalent group of the general formula (i) or (ii).

$$-C_tF_{2t}[OCF_2CF(CF_3)]_pOCF_2(CF_2)_xCF_2O[CF(CF_3)CF_2O]_qC_tF_{2t}- \qquad (i)$$

Herein p and q each are an integer of 1 to 150, the sum of p+q is on the average 2 to 200, r is an integer of 0 to 6, and t is 2 or 3.

$$-C_tF_{2t}[OCF_2CF(CF_3)]_u(OCF_2)_vOC_tF_{2t}- \qquad \text{(ii)}$$

Herein u is an integer of 1 to 200, v is an integer of 1 to 50, and t is as defined above.

Included in the groups of formula (i) are groups of the formula (i'):

$$-CF_2CF_2[OCF_2CF(CF_3)]_xOCF_2(CF_2)_zCF_2O[CF(CF_3)CF_2O]_yCF_2CF_2- \qquad \text{(i')}$$

wherein x and y each are an integer of at least 1, the sum of x+y is on the average 2 to 200, and z is an integer of 0 to 6.

Specific examples of $Rf^1$ include groups of the following three formulae, of which divalent groups of the first formula are preferred.

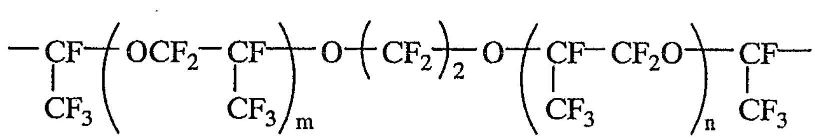

Herein, m and n each are an integer of at least 1, and an average of m+n is from 2 to 200.

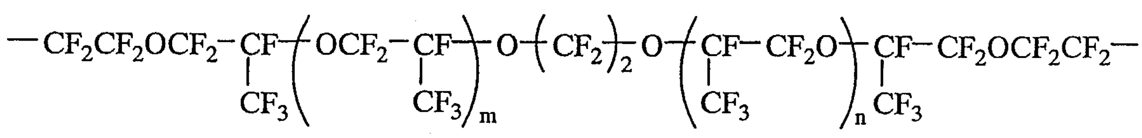

Herein, m and n each are an integer of at least 1, and an average of m+n is from 2 to 200.

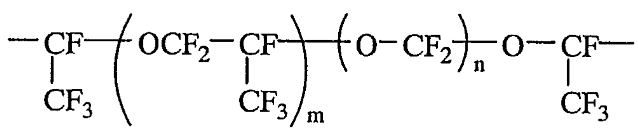

Herein, m is an integer of 1 to 200, and n is an integer of 1 to 50.

Illustrative examples of the polyfluorodialkenyl compound having formula (3) are given below.

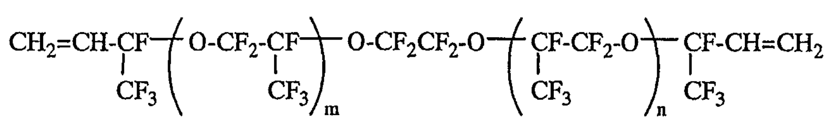

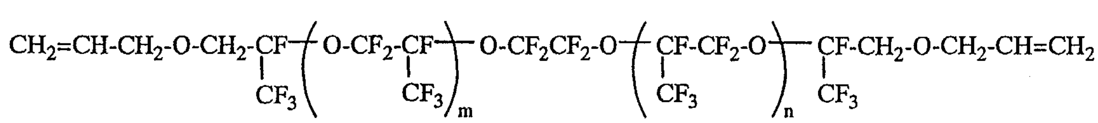

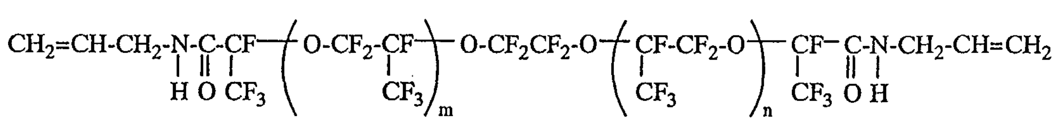

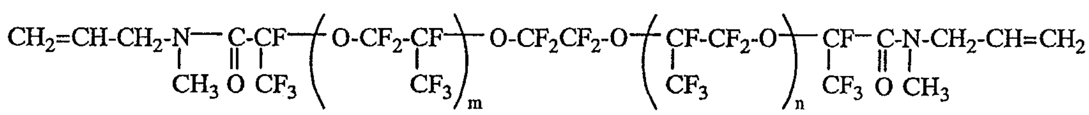

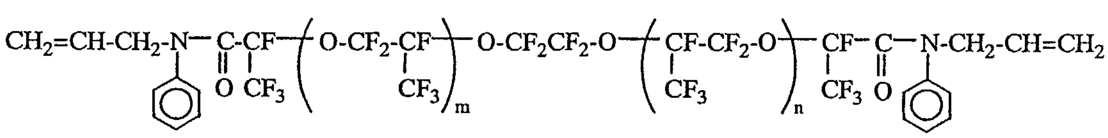

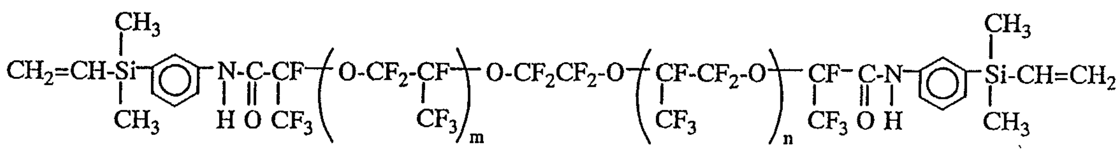

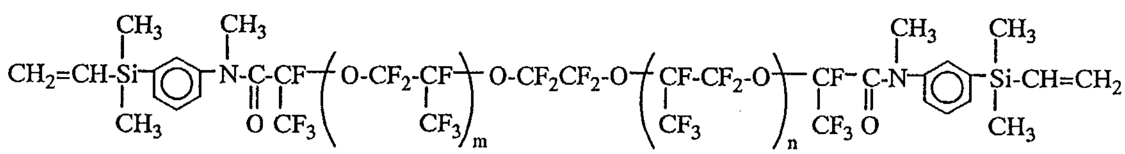

Herein, m and n each are an integer of at least 1, and an average of m+n is from 2 to 200.

The polyfluorodialkenyl compound as component (A) should preferably have a viscosity of 5 to 100,000 mPa·s at 23° C.

Component B: Polyalkenyl compound

Component (B) is a polyalkenyl compound which is selected from perfluoropolyalkenyl compounds of the formula (1), polyalkenylsiloxane compounds of the formula (2) and mixtures thereof. This polyalkenyl compound is added for the purpose of increasing the hardness of the fluoropolyether rubber composition without detracting from strength.

(1) Perfluoropolyalkenyl compound

The perfluoropolyalkenyl compounds used herein have the general formula (1).

$$\left\{H_2C{=}CH{-}(CH_2)_b\right\}_a{-}Q{-}Rf{-}Q{-}\left\{(CH_2)_b{-}CH{=}CH_2\right\}_a \qquad (1)$$

Herein Rf is a divalent perfluoroalkylene group which may contain an ether bond in its molecular chain, Q is independently a tri- or tetra-valent organic group, "a" is independently 2 or 3, and "b" is independently 0 or 1.

In formula (1), "a" is each independently 2 or 3, and "b" is each independently 0 or 1. Q is each independently a tri- or tetra-valent organic group, illustrative examples of which are given below.

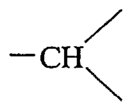 , 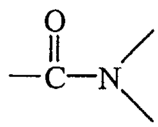 , 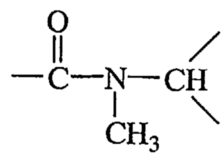 ,

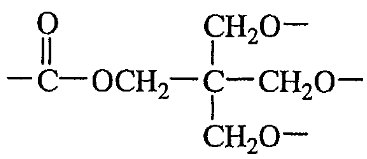 , 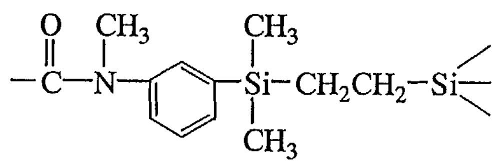 ,

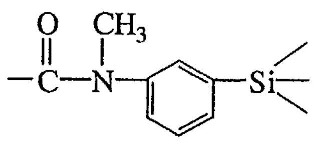 and 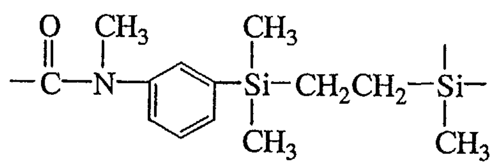

Rf is a divalent group of the general formula (iii), (iv) or (v).

$$-C_tF_{2t}[OCF_2CF(CF_3)]_{p'}OCF_2(CF_2)_rCF_2O[CF(CF_3)CF_2O]_{q'}C_tF_{2t}- \qquad (iii)$$

Herein p' and q' each are an integer of 1 to 10, the sum of p'+q' is on the average 2 to 20, r is an integer of 0 to 6, and t is 2 or 3.

$$-C_tF_{2t}[OCF_2CF(CF_3)]_{u'}(OCF_2)_{v'}OC_tF_{2t}- \qquad (iv)$$

Herein u' is an integer of 1 to 10, v' is an integer of 1 to 10, and t is as defined above.

$$-C_kF_{2k}- \qquad (v)$$

Herein k is an integer of 2 to 20, and the molecular chain may be linear or branched.

Examples of formula (iii) include those of formula (iii').

$$-CF_2CF_2[OCF_2CF(CF_3)]_{x'}OCF_2(CF_2)_zCF_2O[CF(CF_3)CF_2O]_{y'}CF_2CF_2- \qquad (iii')$$

Herein, x' and y' each are an integer of at least 1, the sum of x'+y' is on the average 2 to 20, and z is an integer of 0 to 6.

Of the perfluoropolyalkenyl compounds of formula (1), those of the following formula (1') are preferred.

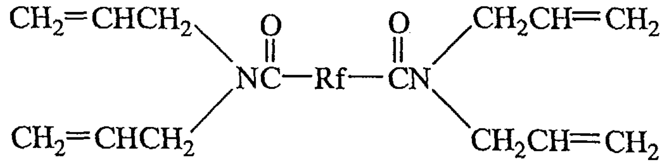

(1')

Herein Rf is as defined above.

If the molecular weight of Rf is too high, that is, if values of p', q', u', v', x' and y' are too large, the distance between crosslinking points becomes so long that the compound may lose its addition effect. If the molecular weight of Rf is too low, the compound becomes less compatible with component (A), probably inducing a lowering of reactivity or a viscosity buildup of the composition. Thus too high or too low molecular weights of Rf are undesirable. If the molecular weight of compound of formula (1) is greater than the molecular weight of component (A), rubber physical properties may become deteriorated.

Specific examples of Rf include groups of the following three formulae, of which divalent groups of the first formula are preferred.

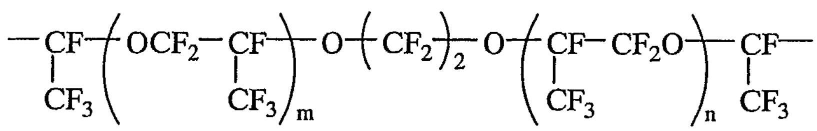

Herein, m and n each are an integer of at least 1, and an average of m+n is from 2 to 20.

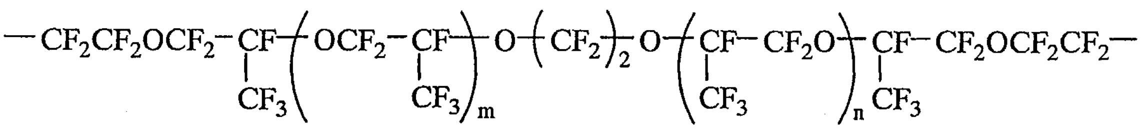

Herein, m and n each are an integer of at least 1, and an average of m+n is from 2 to 20.

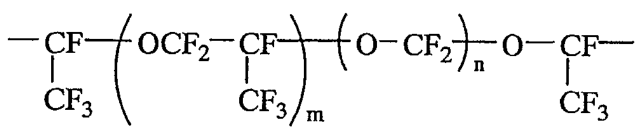

Herein, m is an integer of 1 to 10, and n is an integer of 1 to 10.

Illustrative examples of the perfluoropolyalkenyl compound having formula (1) are given below.

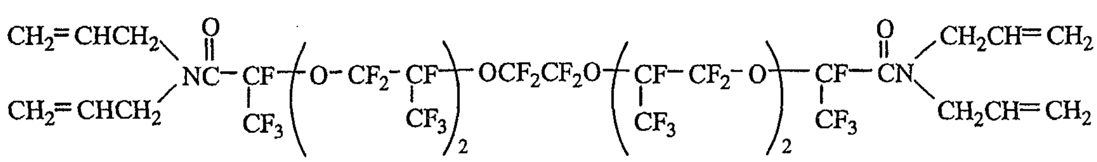

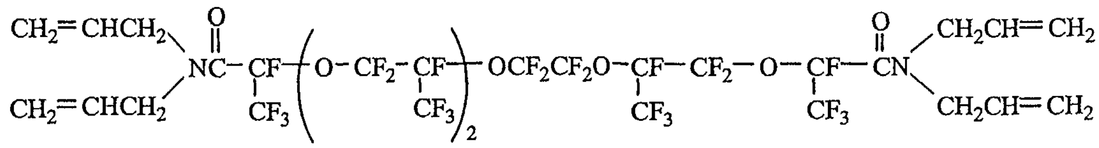

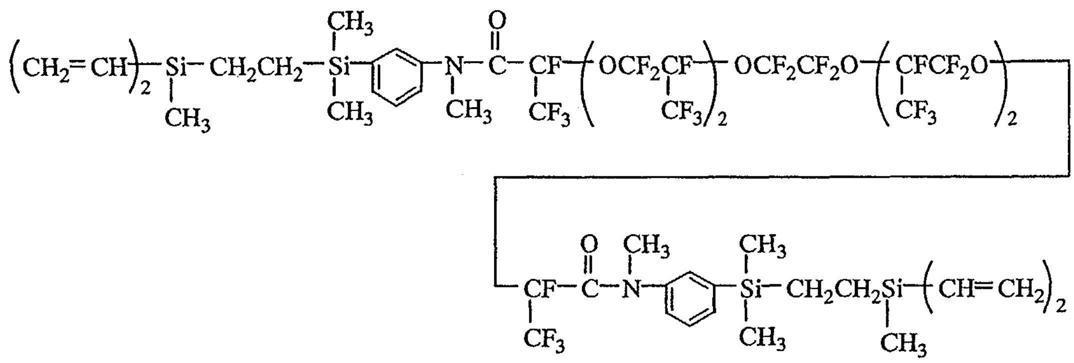

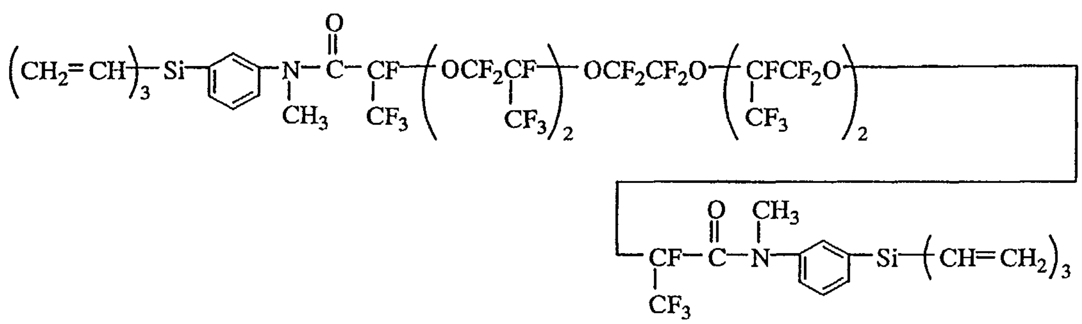

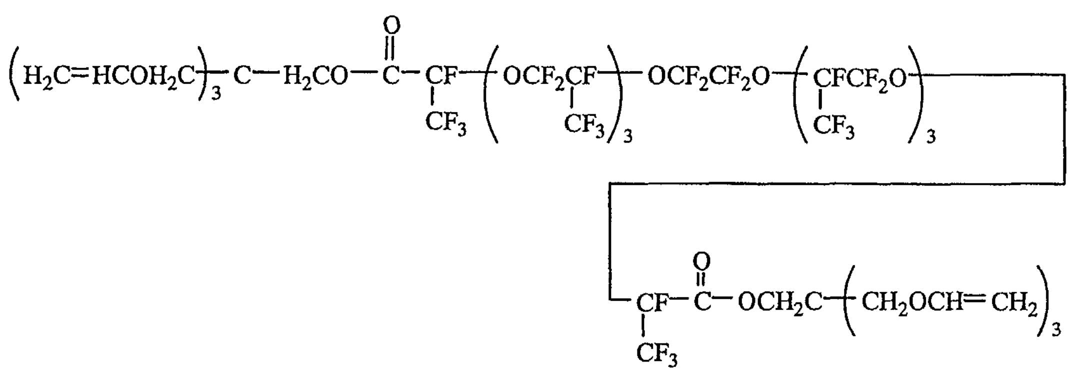

(2) Polyalkenylsiloxane compound

The polyalkenylsiloxane compound used herein has the general formula (2):

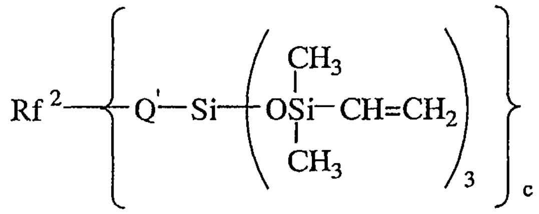

(2)

wherein $Rf^2$ is a monovalent perfluoroalkyl group or divalent perfluoroalkylene group, which may contain an ether bond in its molecular chain, Q' is a divalent organic group, and c is 1 or 2.

In formula (2), c is 1 or 2, preferably 2. Q' is a divalent organic group, examples of which are given below.

$$-CH_2-,$$

$$-CH_2CH_2-,$$

$$-CH_2CH_2CH_2-,$$

$$-CH_2OCH_2CH_2CH_2-,$$

$$-CH_2CH_2OCH_2CH_2CH_2-,$$

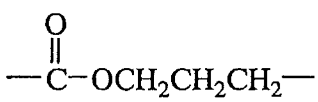 , 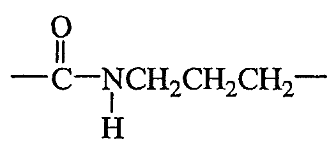 and 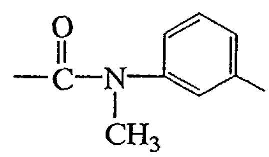

Depending on the value of c, $Rf^2$ may be a both end functional group or a single end functional group. In the case of both end functional group, $Rf^2$ is a perfluoroalkylene group which may contain an ether bond in its molecular chain, and which has the same structure as Rf in the compound of formula (1). That is, $Rf^2$ is a divalent group of the general formula (iii), (iv) or (v).

$$-C_tF_{2t}[OCF_2CF(CF_3)]_{p'}OCF_2(CF_2)_rCF_2O[CF(CF_3)CF_2O]_{q'}C_tF_{2t}- \qquad (iii)$$

Herein p' and q' each are an integer of 1 to 10, the sum of p'+q' is on the average 2 to 20, r is an integer of 0 to 6, and t is 2 or 3.

$$-C_tF_{2t}[OCF_2CF(CF_3)]_{u'}(OCF_2)_{v'}OC_tF_{2t}- \qquad (iv)$$

Herein u' is an integer of 1 to 10, v' is an integer of 1 to 10, and t is 2 or 3.

$$-C_kF_{2k}- \qquad (v)$$

Herein k is an integer of 2 to 20, and the molecular chain may be linear or branched.

Examples of formula (iii) include those of formula (iii').

$$-CF_2CF_2[OCF_2CF(CF_3)]_{x'}OCF_2(CF_2)_zCF_2O[CF(CF_3)CF_2O]_{y'}CF_2CF_2- \quad \text{(iii')}$$

Herein, x' and y' each are an integer of at least 1, the sum of x'+y' is on the average 2 to 20, and z is an integer of 0 to 6.

If the molecular weight of $Rf^2$ is too high, that is, if values of p', q', u', v', x' and y' are too large, the distance between crosslinking points becomes so long that the compound may lose its addition effect. If the molecular weight of $Rf^2$ is too low, the compound becomes less compatible with component (A), probably inducing a lowering of reactivity or a viscosity buildup of the composition. If the molecular weight of compound of formula (2) is greater than the molecular weight of component (A), rubber physical properties may become deteriorated. All these cases are undesirable, as discussed in connection with the compound of formula (1).

Specific examples of the divalent perfluoroalkylene groups (optionally containing an ether bond) represented by $Rf^2$ include groups of the following three formulae, of which divalent groups of the first formula are preferred.

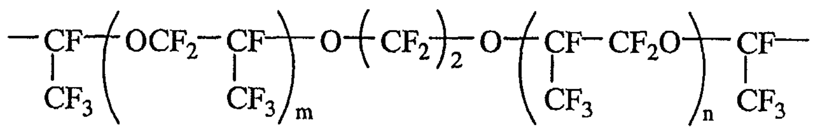

Herein, m and n each are an integer of at least 1, and an average of m+n is from 2 to 20.

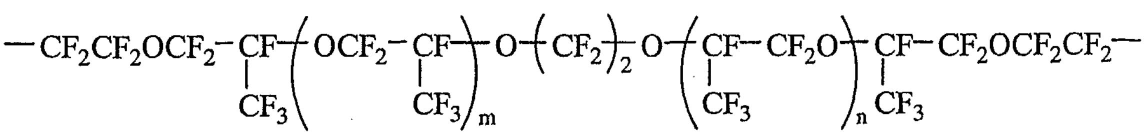

Herein, m and n each are an integer of at least 1, and an average of m+n is from 2 to 20.

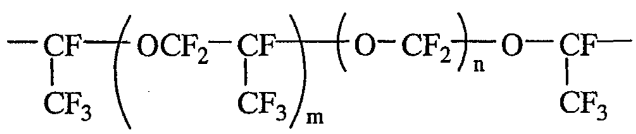

Herein, m is an integer of 1 to 10, and n is an integer of 1 to 10.

Specific examples of the monovalent perfluoroalkyl groups (optionally containing an ether bond) represented by $Rf^2$ include perfluorooxyalkyl groups of the formula (vi) and perfluoroalkyl groups of the formula (vii).

$$F-[CF(CF_3)CF_2O]_w-C_sF_{2s}- \quad \text{(vi)}$$

Herein, s is an integer of 1 to 3, and w is an integer of 1 to 20.

$$C_LF_{2L+1}- \quad \text{(vii)}$$

Herein, L is an integer of 1 to 10.

Illustrative examples of the polyalkenylsiloxane compound having formula (2) are given below.

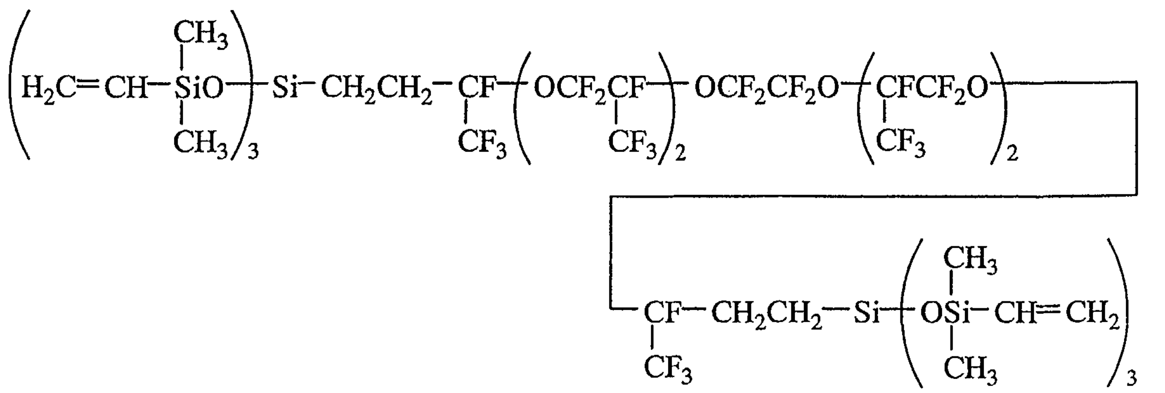

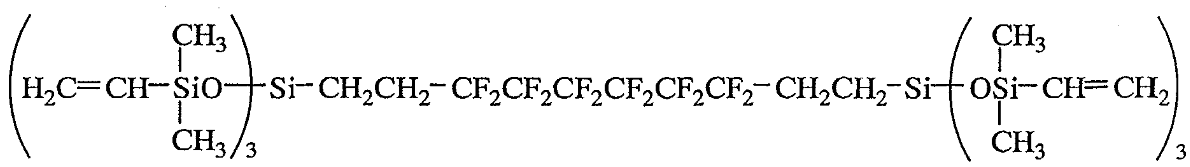

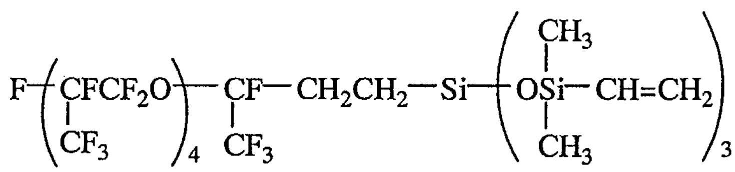

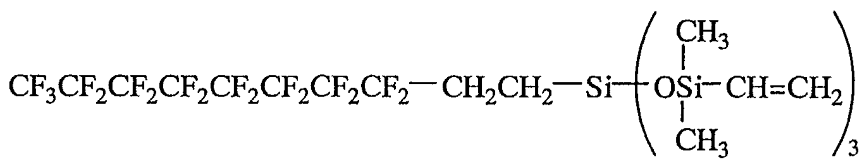

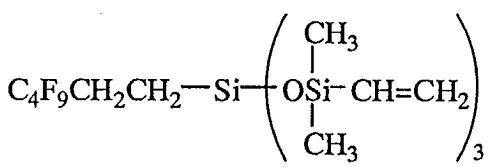

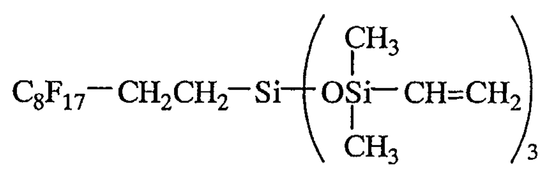

An appropriate amount of component (B) added varies with the molecular structure and vinyl number thereof and is desirably such that the total of vinyl numbers of compounds added as component (B) may not exceed the vinyl number of component (A), preferably the ratio of [the total of vinyl numbers of compounds added as component (B)]/[the vinyl number of component (A)] is less than 1.0, more preferably from 0.2 to 0.8. Too much an amount of component (B) may lead to an increased crosslinking density and hence, a lower rubber strength. Too small an amount of component (B) may fail to exert its addition effect.

Component C: fluorine-modified organosilicon compound

Component (C) is a fluorine-modified organosilicon compound having at least two silicon atom-bonded hydrogen atoms (i.e., hydrosilyl or SiH groups) per molecule. It serves as a crosslinker or chain extender for component (A). When compatibility with and dispersion in component (A) and uniformity after curing are taken into account, the fluorine-modified organosilicon compound as component (C) should preferably have per molecule at least one monovalent perfluorooxyalkyl group, monovalent perfluoroalkyl group, divalent perfluorooxyalkylene group or divalent perfluoroalkylene group and at least two, more preferably at least three, hydrosilyl groups.

Preferred examples of such perfluorooxyalkyl, perfluoroalkyl, perfluorooxyalkylene and perfluoroalkylene groups include those of the following general formulas. monovalent perfluoroalkyl groups:

$C_gF_{2g+1}$-(g is an integer from 1 to 20, and preferably from 2 to 10.) divalent perfluoroalkylene groups:

$$-C_gF_{2g}-$$

(g is an integer from 1 to 20, and preferably from 2 to 10.) monovalent perfluorooxyalkyl groups:

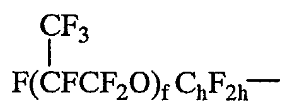

(f is an integer from 2 to 200, preferably 2 to 100, and h is an integer of 1 to 3.)
divalent perfluorooxyalkylene groups:

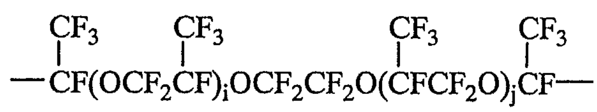

(i and j each are an integer of at least 1, an average of i+j is an integer of 2 to 200, preferably 2 to 100.)

$$-(CF_2CF_2O)_J(CF_2O)_KCF_2-$$

(J and K each are an integer of at least 1, an average of J+K is an integer of 2 to 200, preferably 2 to 100.)

These perfluoroalkyl, perfluorooxyalkyl, perfluoroalkylene and perfluorooxyalkylene groups may be bonded to silicon atoms directly or via divalent linking groups. Suitable divalent linking groups include alkylene groups, arylene groups, combinations thereof, in which may intervene an ether bond, an amide bond, a carbonyl bond or the like, and preferably those of 2 to 12 carbon atoms. Examples of suitable divalent linking groups are:

$$-CH_2CH_2-,$$

$$-CH_2CH_2CH_2-,$$

$$-CH_2CH_2CH_2OCH_2-,$$

$$-CH_2CH_2CH_2-NH-CO-,$$

$$-CH_2CH_2CH_2-N(Ph)-CO-,$$

$$-CH_2CH_2CH_2-N(CH_3)-CO-,$$

$$-CH_2CH_2CH_2\text{-O-CO-},$$

and

$$\text{-Ph'-N}(CH_3)\text{-CO-}.$$

Note that Ph is phenyl and Ph' is phenylene.

In addition to the organic groups containing mono- or divalent fluorinated substituent groups (i.e., perfluoroalkyl, perfluorooxyalkyl, perfluoroalkylene or perfluorooxyalkylene groups), the fluorine-modified organosilicon compound may contain monovalent substituent groups bonded to silicon atoms, preferably substituted or unsubstituted monovalent hydrocarbon groups of 1 to 20 carbon atoms. Examples include alkyl groups such as methyl, ethyl, propyl, butyl, hexyl, cyclohexyl, octyl and decyl, alkenyl groups such as vinyl and allyl, aryl groups such as phenyl, tolyl and naphthyl, aralkyl groups such as benzyl and phenylethyl, or substituted forms of the foregoing in which at least some hydrogen atoms are replaced by chlorine atoms, cyano groups or the like, such as chloromethyl, chloropropyl and cyanoethyl.

The fluorine-modified organosilicon compound (C) may be cyclic, chain-like or three-dimensional network or a combination thereof. No particular limitation is imposed on the number of silicon atoms per molecule in the fluorine-modified organosilicon compound, although it is generally about 2 to 60, and preferably about 3 to 30.

Illustrative examples of the fluorinated group-containing organosilicon compound (C) include compounds of the following formulas, wherein Ph stands for phenyl. These compounds may be used alone or in admixture.

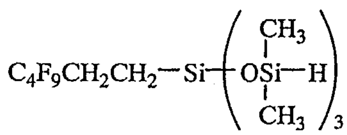

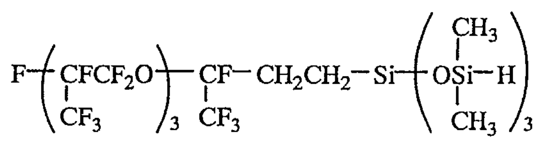

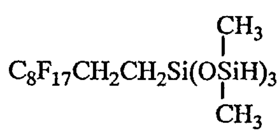

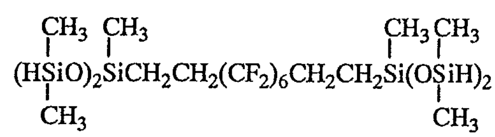

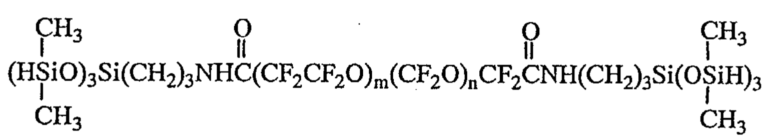

$\overline{m} = 10$, $\overline{n} = 6$

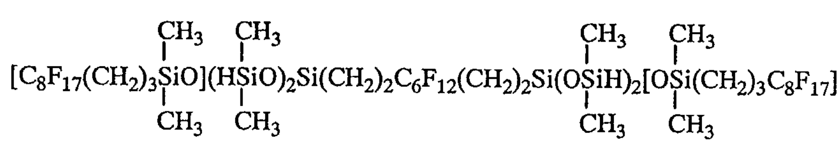

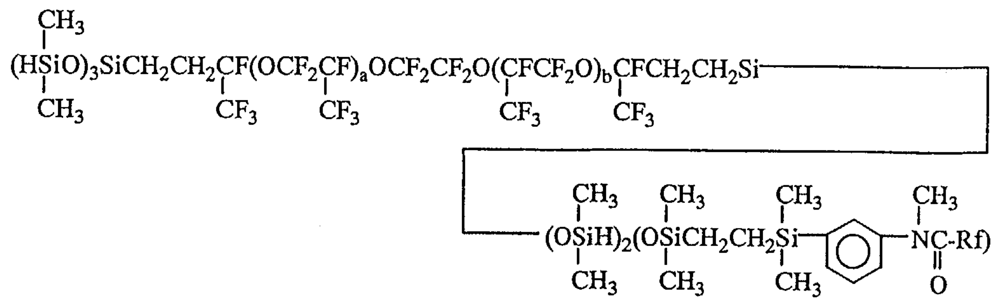

$\overline{a+b} = 3$,

a = 1, 2, b = 1, 2

Rf :

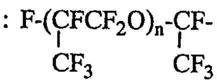

$\overline{n} = 24$

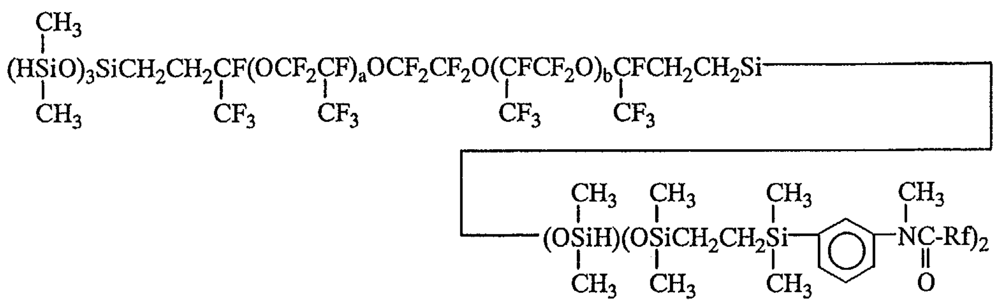

$\overline{a+b} = 2$,

Rf :

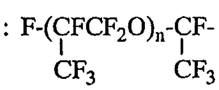

$\overline{n} = 50$

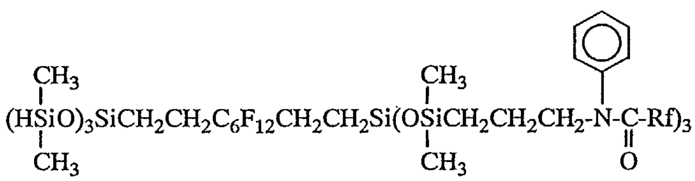

Rf :

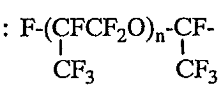

$\overline{n} = 30$

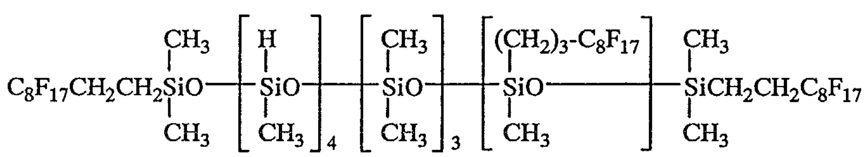

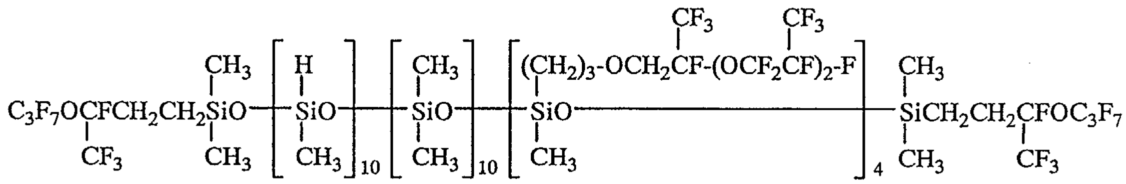

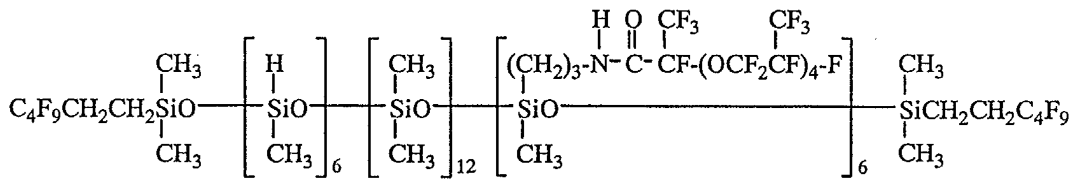

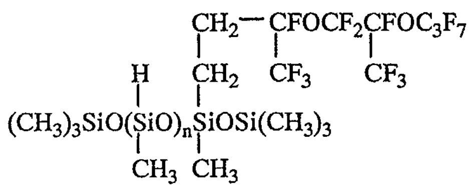

$\overline{n}$ = 3 to 50

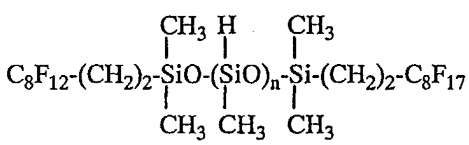

$\overline{n}$ = 3 to 50

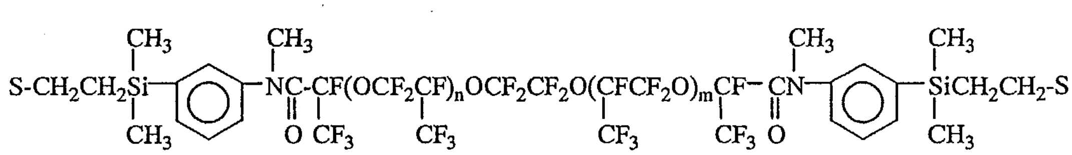

S: 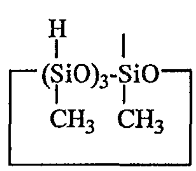

n = 1 to 50, m = 1 to 50, $\overline{n+m}$ = 2 to 50

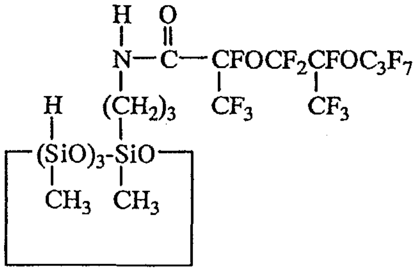

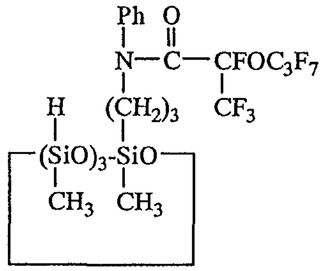

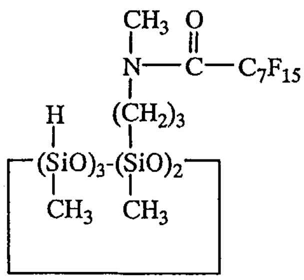

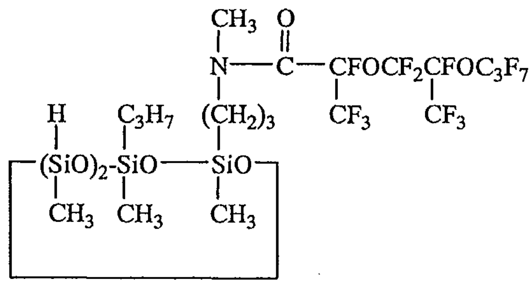

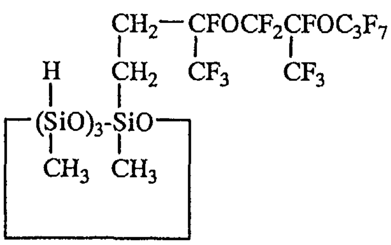

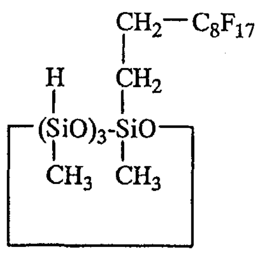

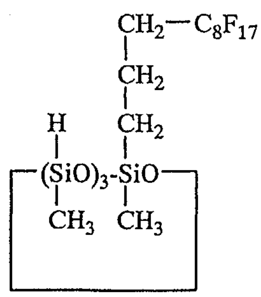

Component (C) is generally included in an effective amount for components (A) and (B) to cure, specifically in an amount which supplies preferably 0.5 to 5.0 moles, and more preferably 1.0 to 2.0 moles, of hydrosilyl (SiH) groups per mole of alkenyl groups on components (A) and (B) combined. Too little component (C) may lead to an inadequate degree of crosslinking, whereas too much may favor chain extension at the expense of curing, may result in foaming of the composition, or may be detrimental to the heat resistance, compressive set and other properties of rubber parts.

The crosslinker (C) should desirably be compatible with components (A) and (B) so that evenly cured parts may be produced.

Component D: Platinum group compound

Component (D) is a platinum group compound which is a catalyst for promoting the addition reaction of alkenyl groups on components (A) and (B) to hydrosilyl groups on component (C). Of such platinum group metal catalysts, platinum compounds are most often used because they are readily available. Exemplary platinum compounds include chloroplatinic acid, complexes of chloroplatinic acid with olefins such as ethylene, complexes of chloroplatinic acid with alcohols and vinylsiloxanes, and metallic platinum supported on silica, alumina or carbon though not limited thereto. Known platinum group metal compounds other than the platinum compounds include rhodium, ruthenium, iridium, and palladium compounds, for example, $RhCl(PPh_3)_3$, $RhCl(CO)(PPh_3)_2$, $Ru_3(CO)_{12}$, $IrCl(CO)(PPh_3)_2$, and $Pd(PPh_3)_4$ wherein Ph denotes phenyl.

Component (D) may be used in a catalytic amount, preferably in an amount to give 0.1 to 500 ppm of platinum group metal based on the total weight of components (A), (B) and (C).

Component E: Hydrophobic silica powder

Component (E) is a hydrophobic silica powder which imparts a suitable physical strength to the cured product obtained from the inventive composition. This hydrophobic silica powder must be a finely divided silica with a BET specific surface area of at least 50 $m^2/g$, and preferably from 50 to 400 $m^2/g$, of the type that is familiar as a silicone rubber filler.

The hydrophobic silica powder should have been treated with various silicon compounds so as to bear vinyl groups on the surface in an amount of $1\times10^{-3}$ to $2\times10^{-2}$ mole/100 g, preferably $1.5\times10^{-3}$ to $1.5\times10^{-2}$ mole/100 g. Surface treatment of silica with vinyl-containing silicon compounds is effective for increasing the hardness and rubber strength of cured products without increasing the viscosity of the composition. Any vinyl-free silane may be used in combination for controlling the attachment of vinyl groups and the degree of treatment on silica surface. Any well-known methods may be employed for the treatment of silica with silicon compounds into hydrophobic silica, and a method of choice depends on the type of silicon compound used.

Examples of the silicon compound used for hydrophobizing include organochlorosilanes such as trimethylchlorosilane, dimethylvinylchlorosilane and dimethyldichlorosilane; organosilazanes such as hexamethyldisilazane, 1,3-divinyl-1,1,3,3-tetramethyldisilazane, and hexamethylcyclotrisilazane; and organohydroxysilanes such as trimethylhydroxysilane and dimethylhydroxysilane. They may be used alone or in admixture.

Component (E) is preferably included in an amount of 10 to 50 parts by weight, and more preferably 10 to 30 parts by weight, per 100 parts by weight of component (A). Less than 10 parts by weight of component (E) results in cured products which may have diminished physical properties and an unstable adhesion. More than 50 parts by weight is undesirable because the composition may have a poor flow and become unsuitable for injection molding and the resulting cured product have a lower physical strength.

Other components

In addition to above components (A) to (E), various ingredients may also be included in the inventive composition. Suitable optional ingredients include plasticizers, viscosity modifiers, parting agents, hydrosilylation catalyst regulators, and inorganic fillers.

As plasticizers, viscosity modifiers, and parting agents, polyfluoromonoalkenyl compounds of the formula (5) and linear polyfluoro compounds of the formulae (6) and (7) may be used alone or in admixture of two or more.

$$Rf^3\text{-}(X')_a\text{-}CH{=}CH_2 \qquad (5)$$

In formula (5), X' and "a" are as defined above, and $Rf^3$ is a group of the general formula (viii):

$$F\text{-}[CF(CF_3)CF_2O]_{w'}\text{-}C_sF_{2s}\text{-} \qquad (viii)^*$$

wherein s is as defined above, and w' is an integer which is from 1 to 150 and smaller than the sum of p+q (average) plus r and smaller than the sum of u and v included in the definition of $Rf^1$ in component (A).

$$A\text{-}O\text{-}(CF_2CF_2CF_2O)_c\text{-}A \qquad (6)$$

In formula (6), A is each independently a group of the formula: $C_{s'}F_{2s'+1}$- wherein s' is an integer of 1 to 3, and c is an integer which is from 1 to 200 and smaller than the sum of p+q (average) plus r and smaller than the sum of u and v included in the definition of $Rf^1$ in component (A).

$$A\text{-}O\text{-}(CF_2O)_d(CF_2CF_2O)_e\text{-}A \qquad (7)$$

In formula (7), A is as defined above, and d and e each are an integer of 1 to 200 such that the sum d+e is no larger than the sum of p+q (average) plus r or the sum u+v for the $Rf^1$ group in component (A).

Specific examples of polyfluoromonoalkenyl compounds of formula (5) include the following, wherein m satisfies the above-indicated condition.

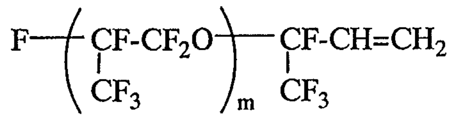

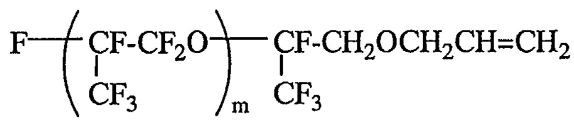

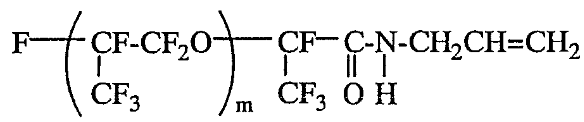

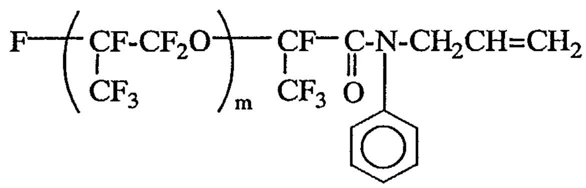

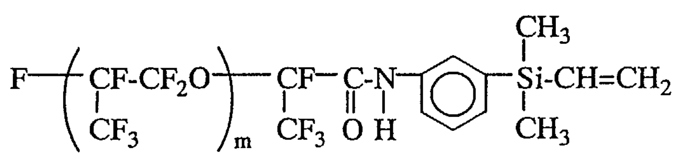

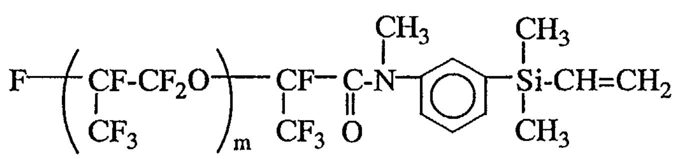

m = 1 to 200

Specific examples of linear polyfluoro compounds of formulae (6) and (7) include the following, wherein m, n and m+n satisfy the above-indicated conditions.

$$CF_3O\text{-}(CF_2CF_2CF_2O)_n\text{-}CF_2CF_3$$

$$CF_3O\text{-}(CF_2O)_m(CF_2CF_2O)_n\text{-}CF_3$$

In these formulas, m and n are each from 1 to 200, and the sum m+n is from 1 to 200.

The amount of polyfluoro compounds of above formulae (5) to (7) included in the inventive composition varies with the type of compound used and the purpose of addition although the amount is preferably in the range of 0.1 to 300 parts by weight, and more preferably 0.2 to 250 parts by weight, per 100 parts by weight of the polyfluorodialkenyl compound of formula (1) as component (A). As with the polyfluorodialkenyl compound, it is desirable for these polyfluoro compounds of formulae (5) to (7) to have a viscosity within a range of 5 to 100,000 mPa·s at 23°C.

Illustrative examples of suitable hydrosilylation catalyst regulators include acetylenic alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; 3-methyl-3-penten-1-yne, 3,5-dimethyl-3-hexen-1-yne and triallyl isocyanurate; polyvinylsiloxane compounds and organophosphorus compounds. The addition of these compounds helps to achieve a suitable curing reactivity and shelf stability.

Illustrative examples of inorganic fillers include reinforcing or semi-reinforcing fillers such as quartz powder, fused quartz powder, diatomaceous earth and calcium carbonate; inorganic pigments such as titanium oxide, iron oxide, carbon black and cobalt aluminate; heat stabilizers such as titanium oxide, iron oxide, carbon black, cerium oxide, cerium hydroxide, zinc carbonate, magnesium carbonate and manganese carbonate; heat conductive agents such as alumina, boron nitride, silicon carbide and metal powders; electrical conductive agents such as carbon black, silver powder and conductive zinc oxide; and organic compounds serving as organic pigments and antioxidants.

These additives may be included in any respective amounts in line with the skilled person's knowledge, i.e. so as to achieve desired effects without unnecessarily compromising the physical properties of the composition or the cured product thereof.

Composition

The fluoropolyether rubber composition of the invention is obtainable by mixing the above-described essential and optional components. In order that the composition be injection moldable, the composition should preferably have a viscosity at 23°C of up to 5,000 Pa·s, more preferably up to 2,000 Pa·s, and most preferably 200 to 1,000 Pa·s. Too high a viscosity may require an extra injection power or interfere with molding. Too low a viscosity is sometimes detrimental to molding operation in that upon removal of molded cured parts, the uncured rubber composition may flow out and sag from the discharge port of the injection machine.

As used herein, the viscosity is a measurement by the method of JIS K-7117 using a rotational viscometer.

It is not critical how to prepare a curable fluoropolyether rubber composition according to the invention. Typically, the polyfluorodialkenyl compound as component (A) and the silica powder as component (E) are previously milled and dispersed on a pressure kneader, planetary mixer, three-roll mill or the like, before the remaining components are added to and mixed with the premix.

The curable fluoropolyether rubber compositions of the invention are adapted for injection molding. Any well-known methods and conditions may be employed for injection molding, with LIMS being preferred. Injection molding conditions may be properly selected depending on the physical properties of the composition and the geometry of molded parts. After the injection molding, post-cure is effected, if necessary, at a temperature of about 100 to 250°C, preferably about 150 to 200°C, for a time of about 1 to 48 hours, preferably about 4 to 12 hours.

The curable fluoropolyether rubber compositions of the invention are molded and cured into rubber articles which are suitable for use in a variety of applications, for example, automobiles, chemical plants, ink jet printers, semiconductor manufacturing lines, analytical or scientific instruments, medical equipment, aircraft, and fuel cells because they have improved solvent resistance and chemical resistance due to high fluorine contents, low moisture permeability, and improved parting property and water repellency due to low surface energy.

Rubber articles made of the cured compositions of the invention include, but are not limited to, rubber parts for automobiles requiring oil resistance, for example, diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, and seals such as oil seals and cylinder head gaskets; rubber parts for chemical plants, for example, pump diaphragms, valves, O-rings, packings, oil seals, and gaskets; rubber parts for ink jet printers and semiconductor manufacturing lines, for example, diaphragms, valves, O-rings, packings, and gaskets which will come in contact with chemicals, and valves requiring low friction and low wear; rubber parts for analytical and scientific instruments, for example, pump diaphragms, valves, and seals (e.g., O-rings, packings); and rubber parts for medical equipment, for example, pumps, valves, joints and face seals. Also included are tent coating materials, sealants, molded parts, extruded parts, coats, copier roll materials, electrical moisture-proof coatings, sensor potting materials, fuel cell sealing materials, and laminate rubber fabrics.

Since the curable fluoropolyether rubber compositions of the invention can have a controlled viscosity prior to curing, they are effectively moldable by injection molding such as LIMS, so that molded rubber parts can be efficiently produced on a mass scale.

EXAMPLE

Examples of the invention are given below by way of illustration and not by way of limitation. All parts are by weight. The viscosity was measured at 23°C by the method of JIS K-7117 using a rotational viscometer.

Preparation Example 1

To 100 parts of a polymer of formula (8) shown below (viscosity 10.5 Pa·s) was added 25 parts of treated silica powder having a vinyl content of $5\times10^{-3}$ mole/100 g and a BET specific surface area of 180 $m^2/g$. They were combined, kneaded on a planetary mixer, and heat treated at 170°C and a reduced pressure of -0.05 MPa for 2 hours. The mixture was dispersed and milled on a three-roll mill, yielding a liquid base (1).

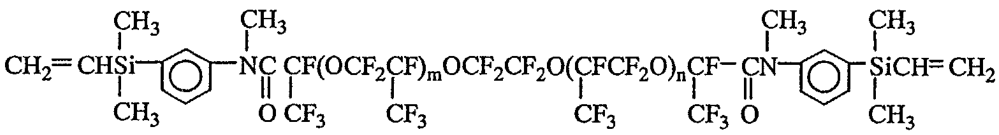

(8)

$\overline{n+m} = 98$

Preparation Example 2

To 100 parts of a polymer of formula (8) (viscosity 10.5 Pa·s) was added 25 parts of silica powder treated with trimethylsiloxy groups and having a BET specific surface area of 180 $m^2/g$. They were combined, kneaded on a planetary mixer, and heat treated at 170°C and a reduced pressure of -0.05 MPa for 2 hours. The mixture was dispersed and milled on a three-roll mill, yielding a liquid base (2).

It is noted that each of the treated silica powders used in Preparation Examples 1 and 2 was prepared by reacting hydrophilic silica in a water dispersion with a corresponding organosilazane, followed by drying and grinding. The content of surface vinyl was determined by NMR analysis.

Examples 1-5 and Comparative Examples 1-2

Using a planetary mixer, compositions of the formulation shown in Table 1 were prepared. The compositions were then evaluated.

Table 1

| Components (pbw) | Example | | | | | Comparative Example | |
|---|---|---|---|---|---|---|---|
| | 1 | 2 | 3 | 4 | 5 | 1 | 2 |
| Base (1) | 125 | 125 | 125 | 125 | 125 | 125 | |
| Base (2) | | | | | | | 125 |
| Additive 1 | 0.40 | | 0.30 | 0.30 | | | 0.30 |
| Additive 2 | | 0.40 | | 0.30 | 0.30 | | 0.30 |
| Additive 3 | | | 0.05 | | 0.10 | 0.40 | |
| Crosslinker | 3.94 | 4.43 | 3.96 | 4.61 | 4.22 | 4.68 | 4.61 |
| Regulator | 0.30 | 0.30 | 0.30 | 0.30 | 0.30 | 0.30 | 0.30 |
| Catalyst | 0.20 | 0.20 | 0.20 | 0.20 | 0.20 | 0.20 | 0.20 |

Additive 1

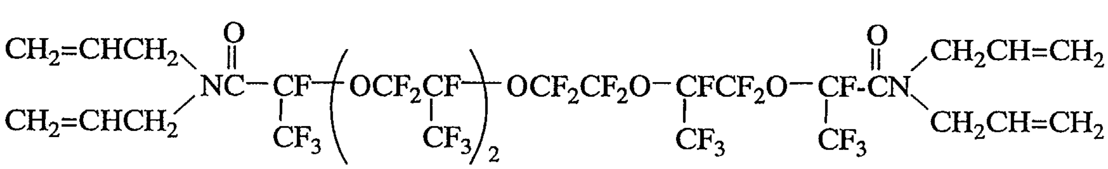

Additive 2

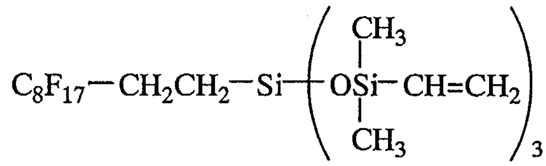

Additive 3

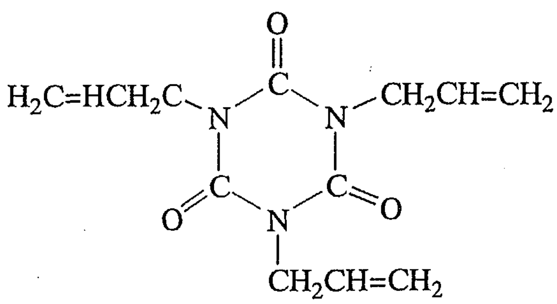

Crosslinker

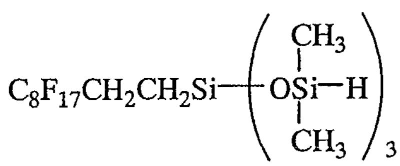

Regulator

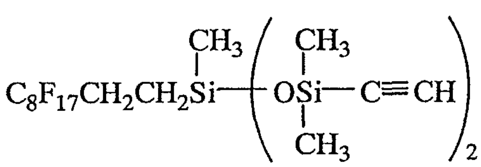

Catalyst

chloroplatinic acid/vinylsiloxane complex in toluene (Pt 0.5 wt%)

[Evaluation of cured rubber]

<u>Rubber physical properties</u>

Each composition was deaerated in vacuum and fed into a mold of 130 × 170 × 2 mm where it was press cured under a pressure of 100 $kgf/cm^2$ and 150°C for 10 minutes. The molded part was post-cured at 200°C for 4 hours, yielding a cured rubber part. The cured rubber part was measured for physical properties including hardness, tensile strength, elongation at break and tear strength, with the results shown in Table 3.

LIMS moldability

Using an injection molding machine HM7 (Nissei Plastic Industrial Co., Ltd.), each composition was molded into an O-ring with a nominal size 214. The moldability was evaluated in accordance with the following four grades. The moldability evaluation is a combination of two terms: "injection moldability" during the molding process and the "appearance" of a molded part and based on the following criterion shown in Table 2. The results are shown in Table 3.

Table 2

| Grade | Injection moldability | Molded part appearance |
|---|---|---|
| Excellent | no flow deficiencies observed under normal injection conditions | no appearance defects observed |
| Good | no flow deficiencies observed under adjusted injection conditions | no appearance defects observed |
| Fair | no flow deficiencies observed under adjusted injection conditions | air voids and gate bites observed, though slight |
| Reject | flow deficiencies observed even under adjusted injection conditions | a number of air voids and gate bites observed |

Table 3

| | Example | | | | | Comparative Example | |
|---|---|---|---|---|---|---|---|
| | 1 | 2 | 3 | 4 | 5 | 1 | 2 |
| Hardness (Duro-A) | 71 | 70 | 68 | 69 | 70 | 74 | 65 |
| Tensile strength (MPa) | 12.1 | 11.8 | 12.4 | 13.0 | 12.3 | 7.6 | 6.7 |
| Elongation at break (%) | 320 | 330 | 280 | 340 | 290 | 220 | 250 |
| Tear strength, crescent (kN/m) | 16.1 | 16.8 | 17.5 | 16.9 | 16.7 | 10.3 | 11.4 |
| LIMS moldability | Excel. | Excel. | Good | Excel. | Good | Reject | Fair |

## Claims

**1.** A fluoropolyether rubber composition suitable for injection molding, comprising

(A) polyfluorodialkenyl compound having alkenyl groups at both ends of its molecular chain,
(B) perfluoropolyalkenyl compound having the general formula (1):

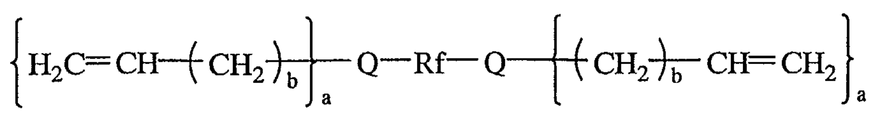

(1)

wherein Rf is a divalent perfluoroalkylene group which may contain an ether bond in its molecular chain, Q are independently tri- or tetra-valent organic groups, indices a are independently 2 or 3 and indices b are independently 0 or 1; and/or polyalkenylsiloxane compound having the general formula (2):

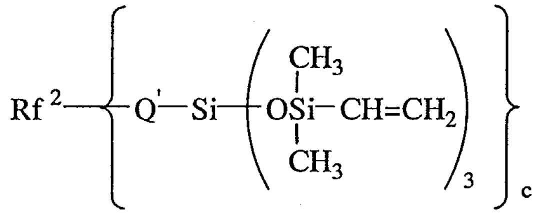

(2)

wherein $Rf^2$ is a monovalent perfluoroalkyl group or divalent perfluoroalkylene group, which may contain an ether bond in its molecular chain, Q' is divalent organic group, and c is 1 or 2,

(C) fluorine-modified organosilicon compound having at least two silicon atom-bonded hydrogen atoms per molecule,

(D) platinum group catalyst, and

(E) hydrophobic silica powder having a BET specific surface area of at least 50 $m^2/g$ and a vinyl content of $1\times10^{-3}$ to $2\times10^{-2}$ mole/100 g and surface treated with organosilicon compound.

**2.** The composition of claim 1 wherein component (A) is polyfluorodialkenyl compound of the following general formula (3):

$$CH_2=CH-(X)_a-Rf^1-(X')_a-CH=CH_2 \qquad (3)$$

wherein X is a divalent group of the formula: $-CH_2-$, $-CH_2O-$, $-CH_2OCH_2-$ or $-Y-NR^1-CO-$ wherein Y is a divalent group of the formula: $-CH_2-$ or the following formula:

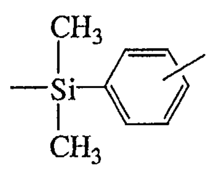

and $R^1$ is hydrogen or a substituted or unsubstituted monovalent hydrocarbon group,

X' is a divalent group of the formula: $-CH_2-$, $-OCH_2-$, $-CH_2OCH_2-$ or $-CO-NR^1-Y'-$ wherein Y' is a divalent group of the formula: $-CH_2-$ or the following formula:

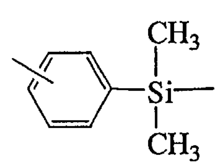

and $R^1$ is as defined above,

a is independently 0 or 1,

$Rf^1$ is a divalent group of the general formula (i):

$$-C_tF_{2t}[OCF_2CF(CF_3)]_pOCF_2(CF_2)_rCF_2O[CF(CF_3)CF_2O]_qC_tF_{2t}- \qquad (i)$$

wherein p and q each are an integer of 1 to 150, the sum of p+q is on the average 2 to 200, r is an integer of 0 to 6, and t is 2 or 3, or the general formula (ii):

$$-C_tF_{2t}[OCF_2CF(CF_3)]_u(OCF_2)_vOC_tF_{2t}- \quad \text{(ii)}$$

wherein u is an integer of 1 to 200, v is an integer of 1 to 50, and t is as defined above.

**3.** The composition of claim 1 or 2, wherein the compound of formula (1) as component (B) is a perfluoropolyalkenyl compound having the general formula (1'):

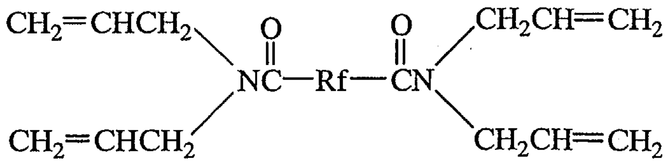

(1')

wherein Rf is a divalent perfluoroalkylene group which may contain an ether bond.

**4.** The composition of any one of claims 1 to 3, wherein the fluorine-modified organosilicon compound as component (C) has at least one monovalent perfluorooxyalkyl group, monovalent perfluoroalkyl group, divalent perfluorooxyalkylene group or divalent perfluoroalkylene group and at least two silicon atom-bonded hydrogen atoms per molecule.

**5.** The composition of any one of claims 1 to 4, having a viscosity of up to 5,000 Pa·s at 23°C.

**6.** A rubber article comprising the fluoropolyether rubber composition of any one of claims 1 to 5 in the cured state.

**7.** The rubber article of claim 6 for use in automobiles, chemical plants, ink jet printers, semiconductor manufacturing lines, analytical or scientific instruments, medical equipment, aircraft or fuel cells.

**8.** The rubber article of claim 6 or 7, which is a diaphragm, valve, O-ring, oil seal, gasket, packing, joint or face seal.

**9.** The rubber article of any one of claims 6 to 8, which has been prepared by injection molding.

**10.** A process of making an article comprising moulding and curing a composition according to any one of claims 1 to 5.

European Patent Office

# EUROPEAN SEARCH REPORT

Application Number
EP 05 25 0126

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 223 194 A (SHIN-ETSU CHEMICAL CO., LTD) 17 July 2002 (2002-07-17)<br>* claim 1 *<br>* page 14, line 15 - line 33 * | 1,2,4-10 | C08L71/02<br>C08G65/02<br>C08G65/336 |
| D,Y | PATENT ABSTRACTS OF JAPAN<br>vol. 2003, no. 02,<br>5 February 2003 (2003-02-05)<br>& JP 2002 293919 A (SHIN ETSU CHEM CO LTD), 9 October 2002 (2002-10-09)<br>* abstract * | 1,2,4-10 | |
| A | US 2002/146575 A1 (SHUDO SHIGEKI)<br>10 October 2002 (2002-10-10)<br>* claim 1 * | 1,2,4-10 | |

TECHNICAL FIELDS SEARCHED (Int.Cl.7)

C08L
C08G

The present search report has been drawn up for all claims

| Place of search | Date of completion of the search | Examiner |
|---|---|---|
| Munich | 12 May 2005 | Andriollo, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

1

## ANNEX TO THE EUROPEAN SEARCH REPORT ON EUROPEAN PATENT APPLICATION NO. EP 05 25 0126

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2005

| Patent document cited in search report | | Publication date | Patent family member(s) | | | Publication date |
|---|---|---|---|---|---|---|
| EP 1223194 | A | 17-07-2002 | JP | 2002212425 | A | 31-07-2002 |
| | | | DE | 60200427 | D1 | 09-06-2004 |
| | | | EP | 1223194 | A1 | 17-07-2002 |
| | | | US | 2002132902 | A1 | 19-09-2002 |
| JP 2002293919 | A | 09-10-2002 | NONE | | | |
| US 2002146575 | A1 | 10-10-2002 | JP | 2002302607 | A | 18-10-2002 |

EPO FORM P0459

For more details about this annex : see Official Journal of the European Patent Office, No. 12/82